# FASCICULE DE BREVET EUROPEEN

(11) **EP 0 949 426 B1**
(45) Date de publication et mention de la délivrance du brevet: **21.01.2004**
(21) Numéro de dépôt: 99400784.7
(22) Date de dépôt: 31.03.1999
(51) Int. Cl.: F16C 23/04

(54) **Ensemble de deux objets articulés entre eux avec deux degrés de liberté en rotation**
Einheit aus zwei mit zwei Freiheitsgraden miteinander angelenkten Elementen
Set of two interconnected articulated objects having two degrees of freedom

(30) Priorité: 09.04.1998 FR 9804422
(43) Date de publication de la demande: 13.10.1999
(73) Titulaire: SNECMA MOTEURS, 75015 Paris (FR)
(72) Inventeur: Kettler, Daniel Germain Alexis, 77590 Chartrettes (FR)
(74) Mandataire: Berrou, Paul

(56) Documents cités:
- FR-A- 1 599 981
- US-A- 3 727 997
- US-A- 4 183 590

## Description

L'invention se rapporte aux articulations de deux objets A et B mobiles l'un par rapport à l'autre avec deux degrés de liberté en rotation, et plus particulièrement à une articulation présentant une résistance élevée, de faible encombrement et de montage rapide.

Dans ce qui suit, et par commodité de langage, on fera en cas de besoin référence à un système de coordonnées orthogonales X,Y et Z, les rôles respectifs des coordonnées pouvant naturellement être permutés sans changer l'invention et le sens de la description. Egalement, une rotation dite selon X,Y ou Z signifie que cette rotation s'effectue selon un axe géométrique de rotation parallèle à X,Y ou Z, sans préjudice de la position exacte de cet axe géométrique de rotation.

On trouve fréquemment dans les machines des vérins, soit par exemple l'objet B, permettant de déplacer l'un par rapport à l'autre deux objets, par exemple A et C, de la machine, A étant par exemple la structure fixe de la machine et C étant par exemple un organe mobile de cette machine, ces vérins étant connectés à des sources d'alimentation en énergie habituellement hydrauliques, pneumatiques ou électriques. Dans le cas notamment où le déplacement relatif des objets A et C n'est pas une translation pure, il devient nécessaire de lier les extrémités du vérin audits objets A et C par des articulations présentant des degrés de liberté en rotation en fonction de ce déplacement. Une telle disposition peut être aussi nécessaire pour remédier aux imprécisions dans le positionnement relatif des objets A et C.

Dans le cas où l'un des objets A ou C à relier pivote par rapport à l'autre selon X par exemple, il est connu de relier au moins une extrémité du vérin à l'objet A ou B correspondant par une articulation simple à un seul degré de liberté en rotation selon X, ladite articulation comportant un arbre cylindrique dans un alésage orienté parallèlement à X. A cause des erreurs de positionnement selon X entre les objets A et C résultant des tolérances de fabrication, cette solution combine deux inconvénients:
- un réglage du positionnement du vérin le long de l'arbre peut être nécessaire pour compenser les erreurs de positionnement résultant des tolérances de fabrication,
- un jeu suffisant entre l'arbre et l'alésage peut être nécessaire pour réduire la précision du réglage, voire supprimer ledit réglage, mais ce jeu présente à son tour plusieurs inconvénients:
   - le jeu réduit la précision du déplacement relatif des objets A et C provoqué par le vérin,
   - s'il est important, ce jeu libère le vérin qui peut tourner sur lui-même sous l'effet des vibrations,
   - le contact entre l'arbre et l'alésage ne se fait plus qu'à une extrémité, ce qui augmente les pressions de contacts et peut provoquer la dégradation de l'arbre et de l'alésage à cette extrémité.

A cause de cela, il est connu de relier le corps du vérin à la structure fixe par l'intermédiaire d'une rotule, ladite rotule comportant une portée sphérique mâle attachée habituellement au corps du vérin, ladite rotule comportant également une portée sphérique femelle entourant avec un jeu limité la portée sphérique mâle, ladite portée sphérique femelle étant alors habituellement attachée à la structure fixe. Une telle articulation présente cependant quelques inconvénients:
1. Le vérin peut tourner sur lui-même, par exemple sous l'effet des vibrations de la machine, ce qui peut générer des contraintes dans les connexions aux sources d'énergie et provoquer la destruction desdites connexions. Des moyens complémentaires d'antirotation, c'est à dire empêchant cette rotation, doivent en conséquence être prévus.
2. L'articulation à rotule doit être surdimensionnée pour résister à l'effort transmis par le vérin. C'est notamment le cas lorsque la partie femelle est assemblée sur la partie mâle par déformation permanente de la matière la constituant. Cette matière doit donc rester tendre, et la rotule ne pourra supporter un effort important sans dégradation de la surface intérieure sphérique de la partie femelle, ces dégradations étant produite par les pressions de surface qui en résultent. De plus, ce surdimensionnement doit être augmenté lorsque la machines présente un niveau de vibration élevé. Le surdimensionnement de l'articulation entraîne quant à lui une augmentation de son encombrement et de sa masse.

Le problème se pose particulièrement avec les turbomoteurs pour aéronefs dans lesquels des objets tels les volets de tuyère, les vannes de décharge ou les annaux de commande d'aubes de stator sont mouvementés par des vérins prenant appui sur une structure fixe de grandes dimensions, lesdits turbomoteurs étant par ailleurs le siège de sollicitations et de niveaux vibratoires très élevés. Ces vérins sont typiquement soumis à des accélérations vibratoires de 12G, soit 12 fois la gravité terrestre. Des impératifs de longévité conduisent à dimensionner les articulations pour résister jusqu'à 40G.

On connaît par le brevet US.4.183.590 un palier à rotule dont la partie mâle est une sphère comportant deux plats extérieurs ainsi qu'un alésage cylindrique, et dont la partie femelle est en deux parties et comporte un socle coopérant avec une chape en U pour emprisonner la partie mâle, les ailes du U coopérant avec les plats pour guider la sphère mâle selon un plan parallèle audits plats. Un tel palier assure deux degrés de liberté en rotation et est effectivement capable de supporter des charges importantes, mais il présente l'inconvénient d'être encombrant à cause des vis nécessaires à la liaison des deux parties femelles entre elles et avec le support du palier.

Le problème technique à résoudre est d'articuler deux objets A et B avec deux degrés de liberté en rotation, cette articulation devant combiner une grande robustesse notamment en régime vibratoire et un faible encombrement. Une telle articulation sera avantageusement précise, c'est à dire sans jeu, et simple à réaliser et à assembler.

Pour résoudre ce problème, l'invention propose un ensemble de deux objets A et B articulés entre eux avec deux degrés de liberté en rotation, par exemple X et Y, un premier objet désigné conventionnellement A comportant un arbre à section circulaire selon un axe géométrique, le second objet désigné conventionnellement B comportant lui-même un alésage entourant ledit arbre. Un tel ensemble est remarquable en ce que:
a. il comporte un palier disposé coaxialement audit arbre, ledit palier comportant une bague interne mâle montée rotulante dans une bague externe femelle, ladite bague interne comportant en conséquence une portée sphérique mâle rotulant avec un jeu limité dans une portée sphérique femelle à l'intérieur de la bague externe, ladite bague interne comportant un alésage circulaire centré sur l'axe géométrique du palier, ladite portée sphérique mâle étant délimitée latéralement par deux surfaces d'appui opposées, planes, parallèles entre elles et parallèles à l'axe géométrique du palier, la distance D entre lesdites surfaces d'appui étant supérieure au diamètre de l'alésage et inférieure au diamètre de la portée sphérique mâle, alors que la bague externe comporte deux surfaces de guidage planes, parallèles entre elles et parallèles à l'axe géométrique du palier, lesdites surfaces de guidage étant disposées de part et d'autre des surfaces d'appui et formant avec elles un jeu limité, ledit alésage, ladite portée sphérique mâle et ladite portée sphérique femelle présentant une forme générale de révolution selon l'axe géométrique du palier,
b. la bague interne tourillonne sur l'arbre et est positionnée en translation sur cet arbre,
c. la bague externe est emboîtée dans l'alésage de l'objet B et est attachée audit objet B,
d) la bague externe comporte une ouverture axiale centrée sur l'axe géométrique du palier, la portée sphérique femelle avec l'extérieur du palier, ladite ouverture axiale ayant un profil intérieur selon l'axe géométrique du palier complémentaire au profil extérieur de la bague interne selon ledit axe géométrique, le profil intérieur de l'ouverture axiale étant cependant plus grand que le profil extérieur de la bague interne,
e) lesdites surfaces de guidage sont amovibles.

Par le terme "tourillonnant" on entend que la bague interne peut tourner sur l'arbre avec un jeu limité et sans déplacement sensible le long de cet arbre. Par le terme "jeu limité", on entend le jeu normal nécessaire pour autoriser sans serrage le mouvement relatif des deux surfaces concernées, compte-rendu de l'état des surfaces et des tolérances d'usinage.

Par le terme "profil selon l'axe géométrique du palier", il faut entendre profil de la projection orthogonale sur un plan perpendiculaire audit axe géométrique du palier, par exemple sur le plan YZ.

On comprend que le la bague interne coopère avec l'arbre pour créer une liberté en rotation selon X à l'exclusion de toute autre liberté de mouvement. On comprend également que les surfaces d'appui coopèrent avec les surfaces de guidage pour guider ladite bague interne selon un plan géométrique parallèle audites surfaces, et par conséquent pour limiter la mobilité relative de la bague interne par rapport à la bague externe à un pivotement selon un axe géométrique Y perpendiculaire audites surfaces d'appui et de guidage donc à X. De ce fait, la combinaison de l'arbre, de la bague interne et de la bague externe du palier crée entre les objets A et B une articulation à deux degrés de liberté en rotation selon X et Y à l'exclusion de toute autre liberté de mouvement.

On comprend aussi que les pièces mobiles entre elles peuvent réagir selon des surfaces importantes occupant au mieux l'espace entre l'arbre de l'objet A et l'alésage de l'objet B, et avec des rayons de courbure très voisins ou infinis, soit: la bague interne avec l'arbre, la portée sphérique mâle avec la portée sphérique femelle et les surfaces d'appui avec les surfaces de guidage. Les pressions de surface sont donc réduite, ce qui réduit en charge la dégradation desdites surfaces, améliore la résistance de l'articulation indépendamment des matériaux employés et permet au palier de résister à des sollicitations élevées par rapport aux matériaux employés.

Par ailleurs, les surfaces d'appui et les surfaces de guidage restent à l'intérieure de la sphère géométrique définie par les portées sphériques mâles et femelles. Ainsi, toutes les surfaces précitées se trouvent entre la surface de l'arbre et la sphère géométrique définissant les portées sphériques mâles et femelles. De ce fait, le procédé autorise une articulation peu encombrante entre les objets A et B.

On comprend que cette ouverture axiale constitue pour la bague interne un passage parallèle à l'axe géométrique du palier depuis l'extérieur jusqu'à l'intérieur de la bague externe, ce qui permet de monter très simplement ladite bague interne dans ladite bague externe par une translation parallèle audit axe géométrique du palier. On comprend également que le caractère amovible des surfaces de guidage permet d'obturer ledit passage et d'emprisonner ainsi la bague interne dans la bague externe.

Ainsi, le montage du palier se fait donc très simplement et très rapidement selon les opérations suivantes:
- amener la bague interne dans l'axe géométrique du palier et en face de l'ouverture axiale,
- introduire la bague interne dans l'ouverture axiale jusqu'à ce que la portée sphérique mâle soit à l'intérieur de la portée sphérique femelle, cette introduction s'effectuant par une simple translation selon X,
- faire tourner de 90° selon X la bague interne,
- mettre en place les surfaces de guidage.

Le démontage du palier s'effectue aussi simplement et rapidement par le processus inverse.

On comprend enfin que le palier tel que défini est un moyen essentiel de l'invention.

Avantageusement, les surfaces de guidage seront supportées par des clavettes introduites dans des rainures aménagées dans la bague externe. Cette disposition simplifie l'usinage des surfaces de guidage et permet d'utiliser des matériaux durs, ce qui permet d'améliorer la résistance du palier malgré son faible encombrement.

Avantageusement, la bague externe comportant une surface externe, les clavettes comportant des faces opposées aux surfaces de guidage, lesdites faces opposées aux surfaces de guidage sont dans le prolongement de ladite surface externe.

On comprend qu'avec une telle disposition, le palier étant emboîté dans l'alésage de l'objet B, la surface externe de la bague externe est au contact de l'alésage de l'objet B, les faces des clavettes opposées aux surfaces de guidage arrivant alors contre ledit alésage et ne pouvant de ce fait s'échapper des rainures. Cette disposition a pour effet de maintenir automatiquement les clavettes en position dans les rainures directement par l'alésage dudit objet B lorsque le palier est emboîté dans ledit alésage.

Avantageusement, l'objet B comportant un axe géométrique selon lequel il est susceptible d'exercer une force sur l'objet A, l'axe géométrique de l'objet B étant concourant à l'axe géométrique de l'arbre, les portées sphériques mâle et femelle sont centrées sur le point d'intersection dudit axe géométrique de l'arbre et dudit axe géométrique dudit objet B, et les surfaces de guidage sont parallèles audit axe géométrique de l'objet B.

Les surfaces d'appui divisant la portée sphérique mâle en deux secteurs, une telle disposition a pour effet de faire couper lesdits secteurs par ledit axe géométrique et de rendre lesdits secteurs axialement symétriques par rapport audit axe géométrique de l'objet B, au moins au voisinage dudit axe géométrique de l'objet B. Cette disposition est la meilleure possible pour permettre aux portées sphériques mâle et femelle de réagir sous l'effet de cette force, car elle minimise les pressions de contact. De plus, l'alésage de la bague interne peut porter sur l'arbre suivant toute une génératrice grâce à l'effet rotulant du palier, ce qui permet audit alésage de la bague interne et audit arbre de réagir le mieux possible à cette force avec des pressions de contact minimales. Ainsi, l'articulation entre les objets A et B est donc susceptible de supporter des efforts élevés comparativement aux matériaux employés et à la petite taille du palier.

Dans une forme avantageuse de mise en oeuvre de l'invention, l'objet A ou B est une tige, une biellette ou un corps de vérin dont l'axe géométrique est également l'axe géométrique d'exercice de la force. De tels objets A ou B ont pour fonction de transmettre ou de générer une force et ont une forme générale longitudinale selon leur axe géométrique et un encombrement radial réduit. De ce fait, la présente invention est bien adaptée car elle autorise une articulation résistante et de taille réduite ne débordant radialement desdits objets A ou B. Dans le cas où l'objet A ou B est un corps de vérin, l'invention présente aussi l'avantage d'assurer l'antirotation dudit corps de vérin.

Le palier selon l'invention présente l'avantage de permettre la combinaison d'une résistance élevée avec une grande simplicité de réalisation. En effet:
- chaque pièce peut être réalisée avec des matériaux résistants simplement par des moyens d'usinage conventionnels tels le tournage, le fraisage et la rectification,
- l'assemblage du palier s'effectue sans sertissage ni déformation permanente des pièces, ce qui autorise l'emploi de matériaux durs,
- plus généralement, l'invention n'impose pas de contraintes sur le choix des matériaux et permet donc de choisir pour chacune des pièces des matériaux compatibles entre eux et avec les pièces extérieures, ceci en terme de qualités frottantes et de résistance aux pressions de surface.

L'invention sera mieux comprise et les avantages qu'elle procure apparaîtront plus clairement au vu d'un exemple détaillé de réalisation et des figures annexées.

La figure 1 illustre par une vue en coupe longitudinale le montage typique sur un turbomoteur pour aéronef d'un vérin commandant à partir de la structure fixe un objet mobile pivotant sur ladite structure fixe.

La figure 2 illustre par cette même vue en coupe un exemple de mise en oeuvre du procédé selon l'invention.

La figure 3 illustre par une vue en coupe agrandie le montage du vérin sur la structure fixe.

La figure 4 illustre par une vue éclatée en perspective un exemple détaillé du palier pour mettre en oeuvre le procédé selon l'invention.

La figure 5 illustre par une vue extérieure un autre exemple de positionnement angulaire du palier selon l'invention.

La figure 6 illustre par une vue extérieure en perspective l'ensemble du palier assemblé.

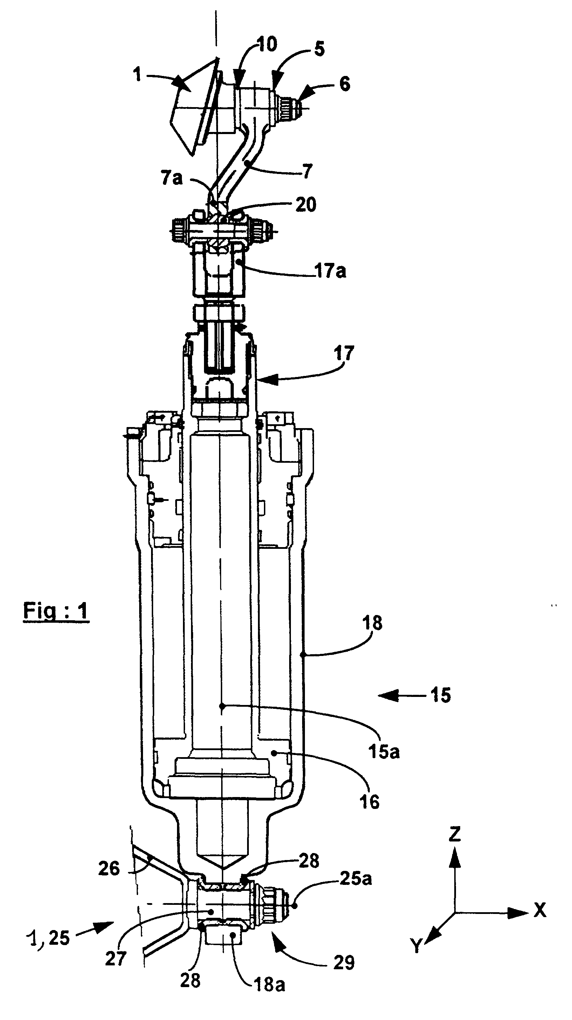

On se reportera en premier lieu à la figure 1. Sur la structure fixe 1 d'un turbomoteur pour aéronef non représenté, soit l'objet A, pivote un élément articulé 5, soit l'objet B, par l'intermédiaire d'un axe d'articulation 6 solidaire d'une manivelle 7, ladite manivelle 7 permettant de mouvementer en rotation l'objet B 5. Une cale d'épaisseur 10 est disposée autour de l'axe d'articulation 6 entre la structure fixe 1 et la manivelle 7, afin de positionner selon l'axe d'articulation 6 l'élément articulé 5 par rapport à la structure fixe 1. Un vérin hydraulique 15 a une forme générale allongée et de révolution selon son axe géométrique 15a et il produit une force s'exerçant selon cet axe géométrique 15a. Le vérin comporte un piston 16 prolongé par une tige 17, ledit piston 16 se déplaçant dans le corps 18 cylindrique du vérin 15. L'extrémité 17a de la tige 17 est liée à l'extrémité 7a de la manivelle 7 par une articulation à rotule 20. L'extrémité 18a du corps du vérin 18 est liée à la structure fixe 1 par des moyens de liaison 25 comportant successivement selon un axe géométrique 25a parallèle à l'axe d'articulation 6: une chape conique 26, un arbre 27 épaulé et deux coussinets 28 épaulés et liés à l'arbre 27 par une liaison 29 par filetage + rondelle + écrou, le vérin 15 pivotant par l'extrémité 18a du corps 18 sur les coussinets 28 et entre les épaulements desdits coussinets. On comprend que le corps du vérin 18 tourillonne sur les coussinets 28 eux-mêmes immobilisés sur l'arbre 27 par le serrage de l'écrou.

On comprend aussi que l'ensemble structure fixe 1 + élément articulé 5 + vérin 15 est hyperstatique selon l'axe géométrique 25a de l'arbre 27, ce qui conduit à monter avec un jeu axial et radial approprié l'extrémité 18a du corps du vérin sur les coussinets 28 afin de permettre une inclinaison suffisante du vérin. Ce jeu peut être réduit par un choix approprié de l'épaisseur de la cale 10 au moment du montage, mais ceci complique le montage et en rallonge la durée. En pratique, on adopte un compromis entre ce jeu et la précision du choix de l'épaisseur de la cale 10 qui en résulte.

Pour la commodité de la description, on fera référence à un système de repères à trois axes géométriques orthogonaux X, Y et Z:
- l'axe géométrique X est parallèle à l'axe géométrique 25a des moyens de liaison 25 et en particulier de l'arbre 27,
- l'axe géométrique Z est parallèle à l'axe géométrique 15a du vérin 15,
- l'axe géométrique Y étant perpendiculaire aux axes géométriques X et Z, et donc perpendiculaire au plan de la figure.

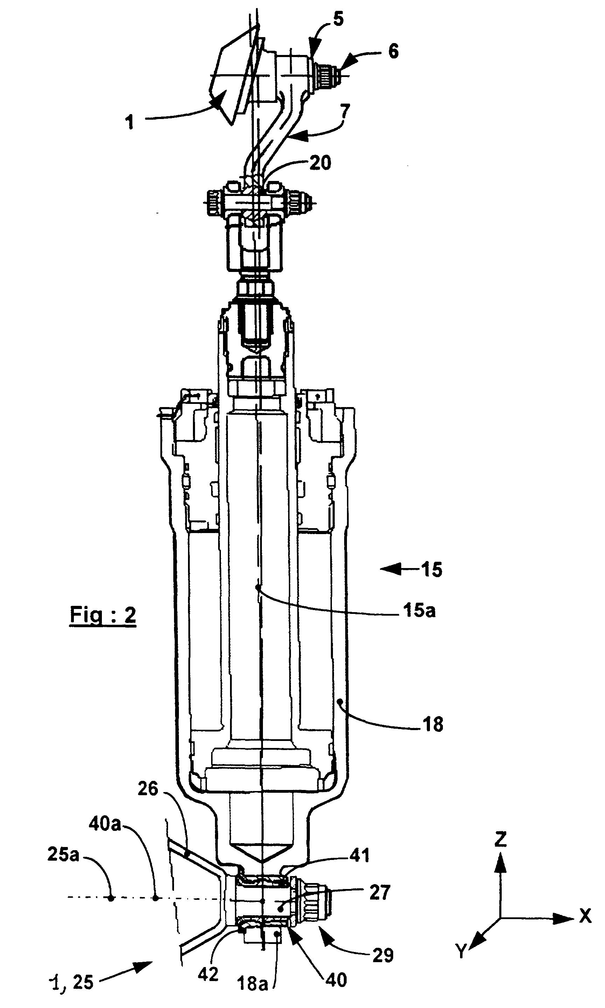

On se reportera maintenant à la figure 2. Selon un exemple de mise en oeuvre de l'invention, l'extrémité 18a du corps du vérin 18 est liée à la structure fixe 1 avec deux degrés de liberté en rotation selon les axes géométriques X et Y par l'intermédiaire d'un palier 40 d'axe géométrique 40a, ledit palier 40 comportant une bague interne 41 disposée à l'intérieur d'une bague externe 42. La bague interne 41 est montée tourillonnante sur l'arbre 27, c'est à dire qu'elle peut tourner autour de l'arbre 27 selon l'axe géométrique X, mais sans liberté en translation selon X, alors que la bague externe 42 est montée dans l'extrémité 18a du corps du vérin 18. La liberté en rotation selon l'axe géométrique Y résultant de la mise en oeuvre du procédé objet de l'invention permet de supprimer la cale d'épaisseur référencée 10 sur la figure 1, et de simplifier le montage de l'ensemble. On comprend que lorsque le palier 40 est monté sur l'arbre 27, leurs axes géométriques respectifs 25a et 40a sont confondus.

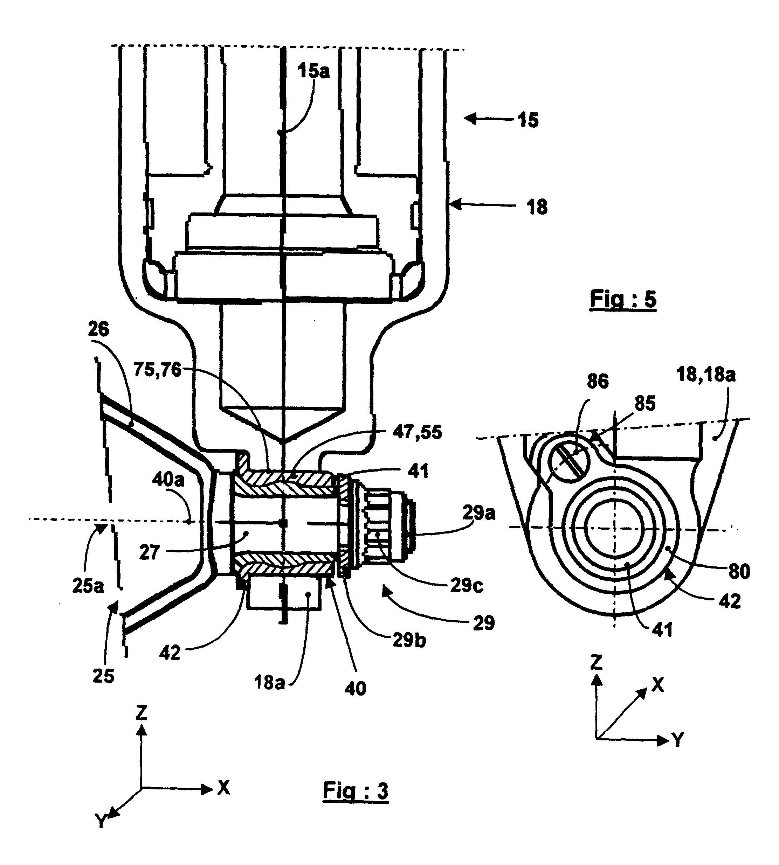

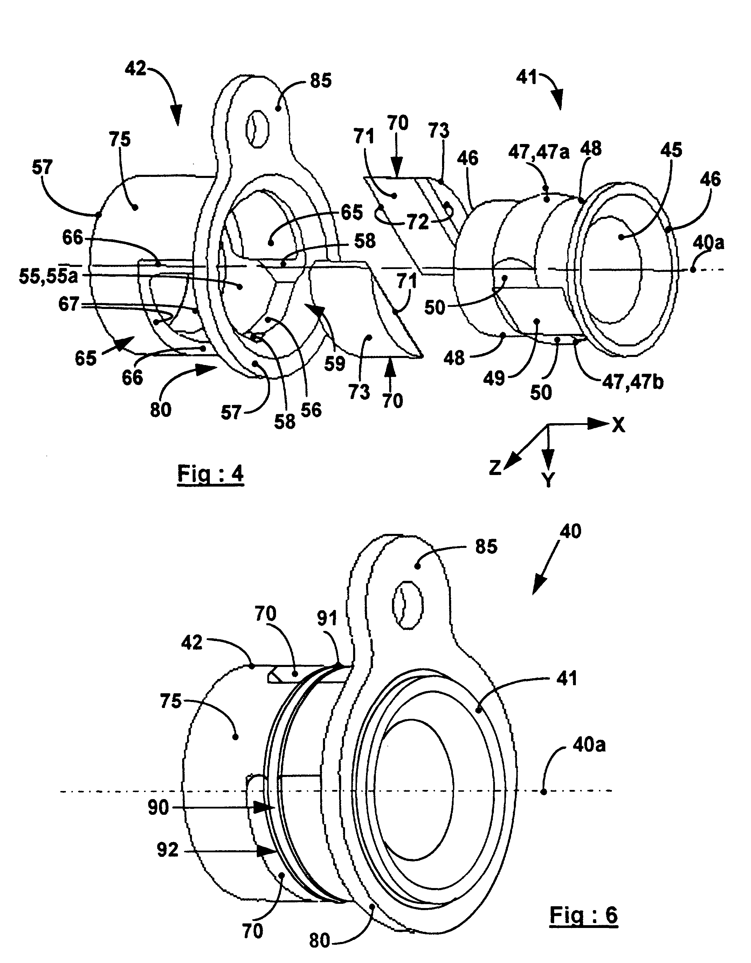

On se reportera maintenant simultanément aux figures 3 et 4, et on référencera 29a, 29b et 29c les composants de la liaison 29, soit respectivement: le filetage prolongeant l'arbre 27, la rondelle et l'écrou. La bague interne 41 a une forme générale de révolution autour de l'axe géométrique 40a du palier 40. Cette bague interne 41 comporte un alésage 45 d'axe géométrique 40a limité de part et d'autre par deux surfaces latérales 46 et autorisant le tourbillonnement de ladite bague interne 41 sur l'arbre 27 entre l'épaulement et la rondelle 29b. La bague interne 41 comporte aussi à sa périphérie une portée sphérique mâle 47 centrée sur l'axe géométrique 25a de l'arbre 27, ladite portée sphérique mâle 47 étant bordée de part et d'autre selon l'axe géométrique 40a du palier 40 par des prolongements 48 s'étendant jusqu'aux faces latérales 46a,46b, la portée sphérique mâle 47 étant donc radialement en saillie par rapport auxdits prolongements 48. La portée sphérique mâle 47 est limitée latéralement par deux surfaces d'appui 49 planes, lesdites surfaces d'appui 49 étant parallèles à l'axe géométrique 40a du palier 40, parallèles entre elles et diamétralement opposées par rapport audit axe géométrique 40a, lesdites surfaces d'appui 49 étant à une distance D l'une de l'autre supérieure au diamètre de l'alésage 45 et inférieure au diamètre de la portée sphérique 47. Les surfaces d'appui peuvent être simplement taillées par exemple par fraisage dans la portée sphérique mâle 47. On comprend que les surfaces d'appui 49 divisent la portée sphérique mâle 47 en deux secteurs diamétralement opposés 47a et 47b. Des chanfreins 50 coupent les angles aux intersections des surfaces d'appui 49 et des secteurs 47a,47b de la portée sphérique mâle 47 afin de simplifier l'usinage d'une ouverture axiale dans la bague externe 42 décrite ci-dessous.

La bague externe 42 a une forme générale de révolution selon l'axe géométrique 40a du palier 40. Cette bague externe 42 comporte une portée sphérique femelle 55 centrée sur l'axe géométrique 40a du palier 40, ladite portée sphérique femelle 55 recevant avec un jeu limité la portée sphérique mâle 47, ladite portée sphérique femelle 55 étant prolongée de part et d'autre par un alésage 56 centré sur l'axe géométrique 40a du palier 40 et s'étendant jusqu'aux extrémités 57de ladite bague externe 42. Au moins d'un coté de la bague externe 42, l'alésage 56 est prolongé radialement par deux échancrures 58 débouchant dans la portée sphérique femelle 55, lesdites échancrures 58 associées audit alésage 56 constituant depuis la portée sphérique femelle 55 jusqu'à l'extérieur une ouverture axiale 59 par laquelle la bague interne 41 est susceptible d'être introduite jusqu'à ce que la portée sphérique mâle 47 soit à l'intérieur de la portée sphérique femelle 55. Pour cela, le profil selon l'axe géométrique 40a de ladite ouverture axiale 59 est au moins aussi grand que celui de la bague interne 41, ces deux profils étant définis par projection orthogonale sur un plan P perpendiculaire à l'axe géométrique 40a du palier 40. Ainsi, pour monter la bague interne 41 dans la bague externe 42, on présente la bague interne 41 dans l'axe géométrique 40a du palier 40, les secteurs 47a,47b de la portée sphérique mâle 47 étant en face des échancrures 58, on introduit la bague interne 41 dans la bague externe 42 par un mouvement de translation selon l'axe géométrique 40a du palier 40 jusqu'à ce que la portée sphérique mâle 47 soit à l'intérieur de la portée sphérique femelle 55, et on fait pivoter de 90°, l'une par rapport à l'autre et selon l'axe géométrique 40a du palier 40, la bague interne 41 et la bague externe 42, de sorte que les secteurs 47a,47b de la portée sphérique mâle 47 ne soient plus en face des échancrures 58. La bague interne 41 peut alors rotuler normalement dans la bague externe 42 par les portées sphériques mâles et femelles précitées.

Ce mouvement de rotule est cependant réduit à un pivotement selon un axe géométrique Y perpendiculaire à l'axe géométrique 40a du palier 40 par la disposition suivante. La bague externe 42 comporte deux rainures 65 rectilignes, parallèles entre elles, perpendiculaires à l'axe géométrique 40a du palier 40 et diamétralement opposées par rapport audit axe géométrique 40a, lesdites rainures 65 comportant chacune un fond 66 plan bordé par deux flancs 67, lesdites rainures 65 interférant par les fonds 66 avec la portée sphérique femelle 55. Deux clavettes 70 sont dimensionnées pour s'ajuster dans les rainures 65 et comportent chacune une surface de guidage 71 plane, deux flancs 72 et une surface 73 opposée à la surface de guidage 71. Lorsque les clavettes 70 sont positionnées dans les rainures 65, les surfaces de guidage 71 sont en regard l'une de l'autre à une distance légèrement supérieure à la distance D entre les surfaces d'appui 49, de façon à guider dans un plan et avec un jeu limité la bague interne 41 par ses surfaces d'appui 49. On comprend que les clavettes 70 assurent deux fonctions: effectuer le guidage précité et emprisonner la bague interne dans la bague externe. On comprend aussi que lorsque le palier 40 est assemblé, la bague interne 41 et la bague externe 42 n'ont plus alors qu'un seul degré de liberté en rotation selon un axe géométrique Y perpendiculaire simultanément à l'axe géométrique 40a du palier 40, aux surfaces d'appui 49 et aux surfaces de guidage 66. Par ailleurs, on comprend que l'amplitude de la liberté en rotation selon l'axe géométrique Y est réglée par le jeu laissé entre les prolongements 48 de la portée sphérique mâle 47 et l'alésage 56 de la bague externe 42.

La bague externe 42 comporte également une surface extérieure 75 qui en permet le montage dans un alésage 76 aménagé à l'extrémité 18a du corps du vérin 18. Avantageusement lorsque les clavettes 70 sont dans les rainures 65, les surfaces opposées 73 desdites clavettes 70 sont dans le prolongement de la surface extérieure 75 de la bague externe 42. Ainsi, lorsque la palier 40 est introduit dans l'alésage 76 du vérin 15, les clavettes 70 sont automatiquement maintenues en position et emprisonnées dans les rainures 65 par ledit alésage 76.

Avantageusement, la bague externe 42 comporte aussi à une extrémité 57 un épaulement 80 permettant de positionner ladite bague externe 42 en translation contre le corps du vérin 18. Avantageusement aussi, cet épaulement 80 est coupé au moins d'un coté par une surface de positionnement 81 plane et parallèle à l'axe géométrique 40a du palier 40, ladite surface 81 permettant de positionner angulairement la bague externe 42 sur le corps du vérin 18 de façon que les surfaces d'appui 49 et les surfaces de guidage 71 du palier 40 assemblé soient parallèles à l'axe géométrique 15a du vérin.

On se reportera maintenant à la figure 5. Dans une autre forme de réalisation du palier, ce même épaulement 80 ne comporte plus la surface de positionnement 81 mais un bras radial 85 tenu par exemple par une vis 86 sur le corps du vérin 18, également pour assurer le positionnement angulaire de la bague externe 42 sur le corps du vérin 18.

On se reportera maintenant à la figure 6. Les clavettes 70 sont maintenues en position dans les rainures 65 par un jonc 90 en demi arc de cercle dont chaque extrémité 91 pénètre radialement par un trou dans chaque clavette 70. Ceci empêche les clavettes 70 de tomber lorsque la palier 40 n'est pas monté dans le vérin. Le jonc 90 est bien sûr disposé dans une rainure 92 de forme complémentaire audit jonc 90, ladite rainure 92 étant aménagée dans la surface externe 75 de la bague externe 42 ainsi que dans les surfaces opposées 73 des clavettes 70, afin de pouvoir monter le palier 40 dans le corps du vérin 18 sans devoir enlever ledit jonc 90.

L'invention n'est pas limitée à l'exemple de mise en oeuvre précédemment décrit, mais en couvre au contraire toutes les variantes qui pourraient lui être apportées sans sortir du cadre des revendications. L'ensemble rainures et clavettes peut avoir aussi des flancs droits.

La résistance de l'articulation sera améliorée en lubrifiant les surfaces en contact, ce qui augmente les pressions de surfaces auxquelles la dégradation desdites surfaces apparaît. Dans le cas d'un fonctionnement à haute température, ce qui est souvent le cas dans un turbomoteur pour aéronef, on pourra utiliser un lubrifiant solide, par exemple au molybdène.

La bague externe 42 peut être borgne.

Plus généralement, le procédé peut être appliqué aux renvois de tringlerie couramment utilisés en mécanique.

## Revendications

1. Ensemble de deux objets A et B articulés entre eux avec deux degrés de liberté en rotation, un premier objet (1) désigné conventionnellement A comportant un arbre (27) à section circulaire selon un axe géométrique (25a), le second objet (15) désigné conventionnellement B comportant lui-même un alésage (76) entourant l'arbre (27), **caractérisé en ce que**:
a. Il comporte un palier (40) d'axe géométrique (40a) disposé coaxialement audit arbre (27), ledit palier (40) comportant une bague interne (41) mâle montée rotulante dans une bague externe (42) femelle, ladite bague interne (41) comportant en conséquence une portée sphérique mâle (47) rotulant avec un jeu limité dans une portée sphérique femelle (55) à l'intérieur de la bague externe (42), ladite bague interne (41) comportant un alésage (45) circulaire centré sur l'axe géométrique (40a) du palier (40), ladite portée sphérique mâle (47) étant limitée latéralement par deux surfaces d'appui (49) opposées, planes, parallèles entre elles et parallèles à l'axe géométrique (40a) du palier (40), la distance D entre lesdites surfaces d'appui (49) étant supérieure au diamètre de l'alésage (45) et inférieure au diamètre de la portée sphérique mâle (47), alors que la bague externe (42) comporte deux surfaces de guidage (71) planes, parallèles entre elles et parallèles à l'axe géométrique (40a) du palier (40), lesdites surfaces de guidage (71) étant disposées de part et d'autre des surfaces d'appui (49) et formant avec elles un jeu limité, ledit alésage (45), ladite portée sphérique mâle (47) et ladite portée sphérique femelle (55) présentant une forme générale de révolution selon l'axe géométrique (40a) du palier (40),
b. La bague interne (41) tourillonne sur l'arbre (27) et est positionnée en translation sur cet arbre (27),
c. La bague externe (42) est emboîtée dans l'alésage (76) de l'objet B (15) et est attachée audit objet B (15),
et **en ce que** :
d) la bague externe (42) comporte une ouverture axiale (59) centrée sur l'axe géométrique (40a) du palier (40), ladite ouverture axiale (59) mettant en communication la portée sphérique femelle (55) avec l'extérieur du palier (40), ladite ouverture axiale (59) ayant un profil intérieur selon l'axe géométrique (40a) du palier (40) complémentaire au profil extérieur de la bague interne (41) selon l'axe géométrique (40a), le profil intérieur de l'ouverture axiale (59) étant cependant plus grand que le profil extérieur de la bague interne (41),
e) lesdites surfaces de guidage (71) sont amovibles.

2. Ensemble selon la revendication 1, **caractérisé en ce que** les surfaces de guidage (71) sont supportées par des clavettes (70) introduites dans des rainures (65) aménagées dans la bague externe (42).

3. Ensemble selon la revendication 2, la bague externe (42) comportant une surface externe (75), les clavettes (70) comportant des faces (73) opposées aux surfaces de guidage (71), **caractérisée en ce que** lesdites faces (73) opposées aux surfaces de guidage (71) sont dans le prolongement de ladite surface externe (75). 4 3

4. Ensemble selon l'une quelconque des revendications 1 à 3 l'objet B (15) comportant un axe géométrique (15a) selon lequel il est susceptible d'exercer une force sur l'objet A, l'axe géométrique (15a) de l'objet B (15) étant concourant à l'axe géométrique (25a) de l'arbre (27), **caractérisé en ce que** les portées sphériques mâle (47) et femelle (55) sont centrées sur le point d'intersection dudit axe géométrique (25a) de l'arbre (27) et dudit axe géométrique (15a) de l'objet B (15), et les surfaces de guidage (71) sont parallèles audit axe géométrique (15a) de l'objet B (15).

5. Ensemble selon la revendication 4 **caractérisé en ce que** l'objet B (15) est une tige (17) d'axe géométrique (15a).

6. Ensemble selon la revendication 4 **caractérisé en ce que** l'objet B (15) est une biellette d'axe géométrique (15a).

7. Ensemble selon la revendication 4 **caractérisé en ce que** l'objet B (15) est un corps de vérin d'axe géométrique (15a).

## Patentansprüche

1. Einheit mit zwei Elementen A und B, die mit zwei Freiheitsgraden drehbar aneinander angelenkt sind, wobei ein erstes Element (1), das in herkömmlicher Weise mit A bezeichnet wird, eine Welle (27) mit kreisförmigem Querschnitt auf einer Geometrieachse (25a) aufweist, wobei das zweite Element (15), das in herkömmlicher Weise mit B bezeichnet wird, eine Bohrung (76) aufweist, die die Welle (27) umgibt,
**dadurch gekennzeichnet, dass**
a) diese Einheit ein Lager (40) mit der Geometrieachse (40a) enthält, das koaxial mit der genannten Welle (27) angeordnet ist, wobei dieses Lager (40) aus einem Innenring (41) besteht, der rotierend in einem Außenring (42) steckt, wobei dieser Innenring (41) dementsprechend eine nach außen gewölbte kugelförmige Kontaktfläche (47) besitzt, die mit einem begrenzten Spiel in einer nach innen gewölbten kugelförmigen Kontaktfläche (55) im Inneren des Außenrings (42) rotiert, wobei dieser Innenring (41) eine kreisförmige Bohrung (45) aufweist, die auf der Geometrieachse (40a) des Lagers (40) zentriert ist, wobei diese nach außen gewölbte kugelförmige Kontaktfläche (47) seitlich durch zwei einander gegenüberliegende, ebene Anlageflächen (49) begrenzt ist, die parallel zueinander und parallel zur Geometrieachse (40a) des Lagers (40) liegen, wobei der Abstand D zwischen diesen Anlageflächen (49) größer als der Durchmesser der Bohrung (45) und kleiner als der Durchmesser der nach außen gewölbten kugelförmigen Kontaktfläche (47) ist, während der Außenring (42) zwei ebene Führungsflächen (71) aufweist, die parallel zueinander und parallel zur Geometrieachse (40a) des Lagers (40) liegen, wobei diese Führungsflächen (71) beiderseits der Anlageflächen (49) angeordnet sind und mit ihnen ein begrenztes Spiel bilden, wobei die Bohrung (45), die nach außen gewölbte kugelförmige Kontaktfläche (47) und die nach innen gewölbte kugelförmige Kontaktfläche (55) allgemein eine um die Geometrieachse (40a) des Lagers (40) umlaufende Form aufweisen;
b) der Innenring (41) auf der Welle (27) dreht und auf dieser Welle (27) verschiebbar positioniert ist;
c) der Außenring (42) in der Bohrung (76) des Elements B (15) eingesetzt ist und an diesem Element B (15) befestigt ist, und dass
d) der Außenring (42) eine axiale Öffnung (59) aufweist, die auf der Geometrieachse (40a) des Lagers (40) zentriert ist, wobei diese axiale Öffnung (59) die nach innen gewölbte kugelförmige Kontaktfläche (55) mit der Außenseite des Lagers (40) in Verbindung setzt, wobei diese axiale Öffnung (59) ein Innenprofil entsprechend der Geometrieachse (40a) des Lagers (40) aufweist, das komplementär zu dem Außenprofil des Innenrings (41) entsprechend der Geometrieachse (40a) geformt ist, wobei das Innenprofil der axialen Öffnung (59) jedoch größer ist als das Außenprofil des Innenrings (41),
e) die genannten Führungsflächen (71) lösbar sind.

2. Einheit nach Anspruch 1,
**dadurch gekennzeichnet,**
**dass** die Führungsflächen (71) durch Keile (70) gestützt werden, die in Rillen (65) eingesetzt sind, die in dem Außenring (42) ausgeführt sind.

3. Einheit nach Anspruch 2, wobei der Außenring (42) eine Außenfläche (75) aufweist, die Keile (70) Flächen (73) aufweisen, die von den Führungsflächen (71) abgewandt sind,
**dadurch gekennzeichnet,**
**dass** diese Flächen (73), die von den Führungsflächen (71) abgewandt sind, sich in der Verlängerung der Außenfläche (75) befinden.

4. Einheit nach einem der Ansprüche 1 bis 3, wobei das Element B (15) eine Geometrieachse (15a) aufweist, auf der es eine Kraft auf das Element A ausüben kann, wobei die Geometrieachse (15a) des Elements B (15) durch den gleichen Punkt geht wie die Geometrieachse (25a) der Welle (27),
**dadurch gekennzeichnet,**
**dass** die nach außen gewölbte kugelförmige Kontaktfläche (47) und die nach innen gewölbte kugelförmige Kontaktfläche (55) auf dem Schnittpunkt der Geometrieachse (25a) der Welle (27) und der Geometrieachse (15a) des Elements B (15) zentriert sind, und die Führungsflächen (71) parallel zu der Geometrieachse (15a) des Elements B (15) verlaufen.

5. Einheit nach Anspruch 4,
**dadurch gekennzeichnet,**
**dass** das Element B (15) eine Stange (17) mit der Geometrieachse (15a) ist.

6. Einheit nach Anspruch 4,
**dadurch gekennzeichnet,**
**dass** das Element B (15) ein Schwingarm mit der Geometrieachse (15a) ist.

7. Einheit nach Anspruch 4,
**dadurch gekennzeichnet,**
**dass** das Element B (15) ein Zylinderkörper mit der Geometrieachse (15a) ist.

## Claims

1. Set of two objects A and B articulated to one another with two degrees of freedom in rotation, a first object (1) conventionally denoted A comprising a shaft (27) with a circular cross section along a geometric axis (25a), the second object (15) conventionally denoted B itself comprising a bore (76) surrounding the shaft (27), **characterized in that**:
a. it comprises a bearing (40) of geometric axis (40a) arranged coaxially with respect to the said shaft (27), the said bearing (40) comprising a male internal ring (41) mounted to swivel in a female external ring (42), the said internal ring (41) consequently comprising a male spherical bearing surface (47) swivelling with limited clearance in a female spherical bearing surface (55) inside the external ring (42), the said internal ring (41) comprising a circular bore (45) centred on the geometric axis (40a) of the bearing (40), the said male spherical bearing surface (47) being laterally bounded by two opposed pressing surfaces (49) that are flat, mutually parallel and parallel to the geometric axis (40a) of the bearing (40), the distance D between the said pressing surfaces (49) being greater than the diameter of the bore (45) and smaller than the diameter of the male spherical bearing surface (47), whereas the external ring (42) comprises two guide surfaces (71) that are flat, mutually parallel and parallel to the geometric axis (40a) of the bearing (40), the said guide surfaces (71) being arranged on each side of the pressing surfaces (49) and forming therewith a limited amount of clearance, the said bore (45), the said male spherical bearing surface (47) and the said female spherical bearing surface (55) having an overall shape that exhibits symmetry of revolution about the geometric axis (40a) of the bearing (40),
b. the internal ring (41) swivels on the shaft (27) and is positioned in terms of translation along this shaft (27),
c. the external ring (42) is nested in the bore (76) of the object B (15) and is attached to the said object B (15),
and **in that**:
d) the external ring (42) has an axial opening (59) centred on the geometric axis (40a) of the bearing (40), the said axial opening (59) placing the female spherical bearing surface (55) in communication with the outside of the bearing (40), the said axial opening (59) having an interior profile about the geometric axis (40a) of the bearing (40) that complements the exterior profile of the internal ring (41) about the geometric axis (40a), the interior profile of the axial opening (59) however being larger than the exterior profile of the internal ring (41),
e) the said guide surfaces (71) are removable.

2. Set according to Claim 1, **characterized in that** the guide surfaces (71) are supported by keys (70) introduced into keyways (65) formed in the external ring (42).

3. Set according to Claim 2, the external ring (42) comprising an external surface (75), the keys (70) having faces (73) on the opposite side to the guide surfaces (71), **characterized in that** the said faces (73) on the opposite side to the guide surfaces (71) are in the continuation of the said external surface (75) .

4. Set according to any one of Claims 1 to 3, the object B (15) having a geometric axis (15a) along which it is able to exert a force on the object A, the geometric axis (15a) of the object B (15) being concurrent with the geometric axis (25a) of the shaft (27), **characterized in that** the male (47) and female (55) spherical bearing surfaces are centred on the point of intersection of the said geometric axis (25a) of the shaft (27) with the said geometric axis (15a) of the object B (15), and the guide surfaces (71) are parallel to the said geometric axis (15a) of the object B (15).

5. Set according to Claim 4, **characterized in that** the object B (15) is a rod (17) of geometric axis (15a).

6. Set according to Claim 4, **characterized in that** the object B (15) is a connecting rod of geometric axis (15a).

7. Set according to Claim 4, **characterized in that** the object B (15) is the body of a cylinder actuator of geometric axis (15a).
